Europäisches Patentamt

European Patent Office

Office européen des brevets

(19)

(11) Numéro de publication: **0 189 449**
**B1**

(12) ## FASCICULE DE BREVET EUROPEEN

(45) Date de publication du fascicule du brevet:
03.05.89

(51) Int. Cl.⁴: **A 01 G 13/02**

(21) Numéro de dépôt: **85903308.6**

(22) Date de dépôt: **17.07.85**

(86) Numéro de dépôt international:
**PCT/FR 85/00195**

(87) Numéro de publication internationale:
**WO 86/00780 (13.02.86** Gazette 86/4)

(54) **MACHINE AGRICOLE DE POSE DE FILM SUR DES SEMIS.**

(30) Priorité: **18.07.84 FR 8411617**

(73) Titulaire: **Société d'Extrusion et de Transformation, 12, rue Christophe Colombe, F-75008 Paris (FR)**

(43) Date de publication de la demande:
**06.08.86 Bulletin 86/32**

(72) Inventeur: **EMILY, Jean-Yves, Keranna Bourg de Pencran, F-29311 Landerneau Cédex (FR)**

(45) Mention de la délivrance du brevet:
**03.05.89 Bulletin 89/18**

(74) Mandataire: **Foiret, Claude, ATOCHEM Département Propriété Industrielle, F-92091 Paris la Défense 10 Cédex 42 (FR)**

(84) Etats contractants désignés:
**AT BE CH DE FR GB IT LI LU NL SE**

(56) Documents cités:
**US-A- 3 234 691**

ACTORUM AG

## Description

La présente invention concerne une machine de pose d'un film sur le sol et, en particulier, une machine agricole comportant un dispositif pour découper le film et le maintenir pendant des demi-tours dans les fourrières.

Les machines de pose de film en matière plastique biodégradable servant de bâche sur des semis sont de plus en plus répandues. De telles machines sont décrites dans les brevets français suivants, cités à titre d'exemples: 1 356 657, 2 427 780, 2 476 970, 2 452 871, 2 453 600 et 2 483 380.

Ces machines se montent sur le support trois points, à l'arrière d'un tracteur agricole. Elles comportent un châssis sur lequel est monté un rouleau de film associé à des rouleaux tendeurs. Deux roues plombeuses latérales appliquent les bords du film dans deux sillons latéraux creusés par des moyens du genre soc montés sur la machine devant les roues latérales. Derrière celles-ci, des versoirs rejettent sur les bords du film de la terre afin de le fixer. Derrière les rouleaux, sont généralement prévus des semoirs munis de dispositifs perforateurs. Enfin, certaines machines sont pourvues de couteaux permettant de couper automatiquement le film en bout de champ.

Au bout du champ, l'ensemble de la machine est relevé. On peut couper le film derrière les roues tendeuses, mais alors le bout de film déjà déroulé se froisse pendant le demi-tour et, avant de repartir, il faut repasser le film sous les roues latérales, ce qui est difficile. On peut aussi couper le film devant les roues latérales, mais alors, avant de repartir, il faudra dérouler manuellement une longueur suffisante pour le passer correctement sous ces roues. Toutes ces opérations sont pénibles car les roues semeuses empêchent d'accéder facilement au rouleau, elles font perdre du temps et nécessitent la présence d'une ou deux personnes. Il faut encore noter que l'on place généralement deux ou quatre machines de pose parallèles derrière un tracteuer, ce qui rend encore plus difficile l'accès aux rouleaux de films.

Un autre type de machine de pose de films en papier possédant un dispositif de coupe est décrit dans le brevet des Etats Unis d'Amérique 3 234 691. Ce dispositif est constitué d'une lame tombant sur le film de façon à le trancher et reprenant immédiatement sa position initiale. Un tel système présente l'inconvénient de laisser libre les extrémités du film sur le sol. Pour éviter la prise au vent du film et son arrachage, il est nécessaire de procéder manuellement à sa fixation au sol soit par ajout de terre sur le film soit par enlisement dans le sol.

Un premier objet de l'invention consiste à prévoir des moyens supprimant pratiquement les opérations manuelles au bout du champ et permettant au conducteur du tracteur de réaliser toutes les opérations sans quitter son siège.

Suivant l'invention, il est prévu une machine de pose d'un film sur le sol comportant:

– des moyens pour dévider au moins une bobine de film,

– des roues plombeuses latérales à la portion de terrain couverte par le film et appliquant les bords du film dans deux sillons latéraux effectués par des moyens de creusement,

– un dispositif de maintien du film arrêtant la rotation de la bobine de film,

– un dispositif pour découper le film et le maintenir pendant les demi-tours dans les fourrières constitué par une lame de pelle transversale montée au bout de bras soumis à des moyens de manœuvre et qui peuvent tourner autour d'un axe horizontal transversal, caractérisée en ce que la lame de pelle est située en arrière des roues plombeuses et en ce que les bras sont solidaires de pistons de vérins parallèles formant lesdits moyens de manœuvre dont les corps sont solidaires du châssis de la machine, ledit axe de roation étant réglable en hauteur par rapport au sol, de manière qu'en position de semis les vérins dirigent les bras avec la lame en avant de l'axe de rotation et au-dessus du sol, qu'en position de fin de planche, à l'arrêt, les vérins fassent décrire à la lame un arc de cercle, d'environ 120° vers l'arrière dans le sens contraire des aiguilles d'un montre, au cours duquel le bord de la lame coupe le film, pénètre dans la terre que la lame déplace en arrière, repliant ainsi sur lui-même le bout du film posé tout en amassant sur la partie repliée une masse de terre et qu'en position de début de planche, à l'arrêt, les vérins fassent décrire à la lame le même arc en sens inverse au cours duquel la lame amasse sur le début du film à poser une masse de terre.

Suivant une autre caractéristique, la lame a, vue sur le côte, un profil en Y.

Suivant une autre caractéristique, il est prévu, accroché au châssis, derrière chaque roue plombeuse, un sabot monté au bout d'un bras pouvant tourner autour d'un axe horizontal et déplaçable par un vérin, la largeur du sabot étant de l'ordre de l'épaisseur de la roue plombeuse, l'axe du bras étant positionné légèrement derrière l'arbre de la roue plombeuse et la longueur du bras étant de l'ordre du rayon de la roue plombeuse, le sabot étant perpendiculaire à la tige et dirigé vers l'avant.

Suivant une autre caractéristique, les moyens de creusement de chaque sillon latéral comprennent un disque ouvreur dont l'axe est dirigé de manière que son point de rencontre avec l'axe de l'autre disque ouvreur soit devant les disques ouvreurs, un rouleau transversal de tassement, dont l'arbre porte à chacune de ses extrémités un disque concave vers l'extérieur du cylindre du rouleau de tassement, le rouleau et les disques concaves tournant fou autour dudit arbre, et, à l'arrière de chaque disque concave, un soc de rasette dont le bord inférieur est au niveau du fond du sillon et ouvert vers l'extérieur.

Suivant une autre caractéristique, il est prévu un dévideur de film comprenant les roues plombeuses, un rouleau fou transversal, la bobine de film reposant, à l'arrière, sur les roues plombeuses et, à l'avant sur le rouleau fou transversal, le fil en cours de déroulement étant appliqué sur l'avant du rouleau fou transversal et sous les roues plombeuses.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue schématique en élévation d'une machine de pose de film, suivant l'invention,

la Fig. 2 est une vue en plan de la machine de la Fig. 1,

les Figs. 3a à 3c sont des vues très schématiques illustrant le fonctionnement du dispositif de coupe et de blocage du film utilisé dans la machine de la Fig. 1, pendant la phase de semis, en fin, puis en début de planche,

la Fig. 4 est une vue schématique en plan du système de dévidage de la bobine de film utilisée dans la machine de la Fig. 1,

la Fig. 5 est une vue en élévation du système de dévidage de la Fig. 4,

la Fig. 6 est une vue schématique illustrant le fonctionnement du système de dévidage des Figs. 4 et 5,

la Fig. 7 est une vue schématique en plan des éléments de creusement et de mise en forme des sillons latéraux utilisés dans la machine de la Fig. 1, et

la Fig. 8 est une vue en coupe illustrant la formation des sillons latéraux par les éléments montrés à la Fig. 7.

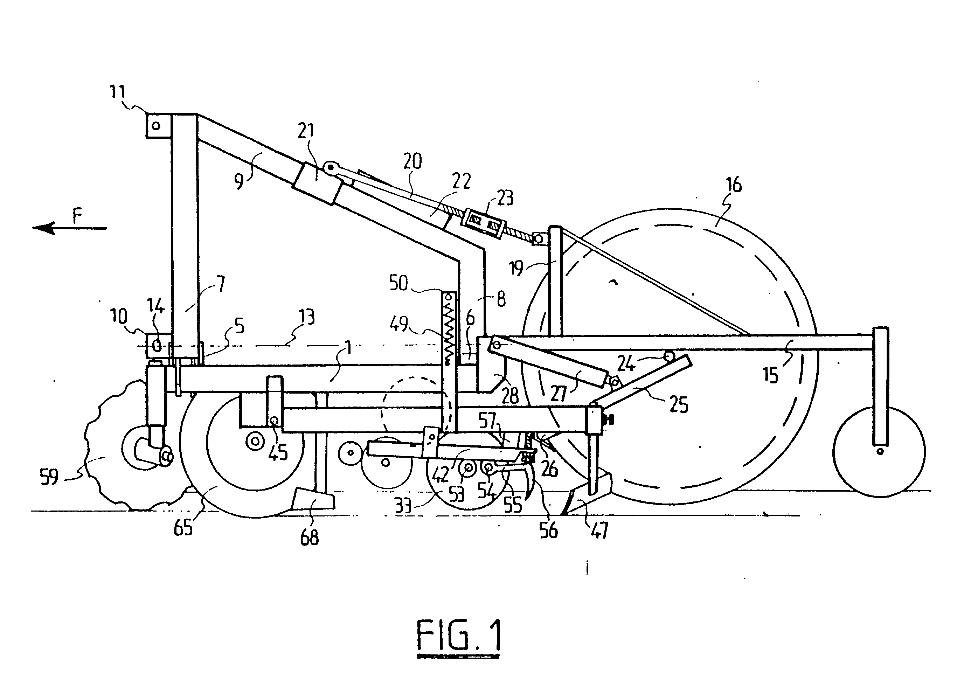

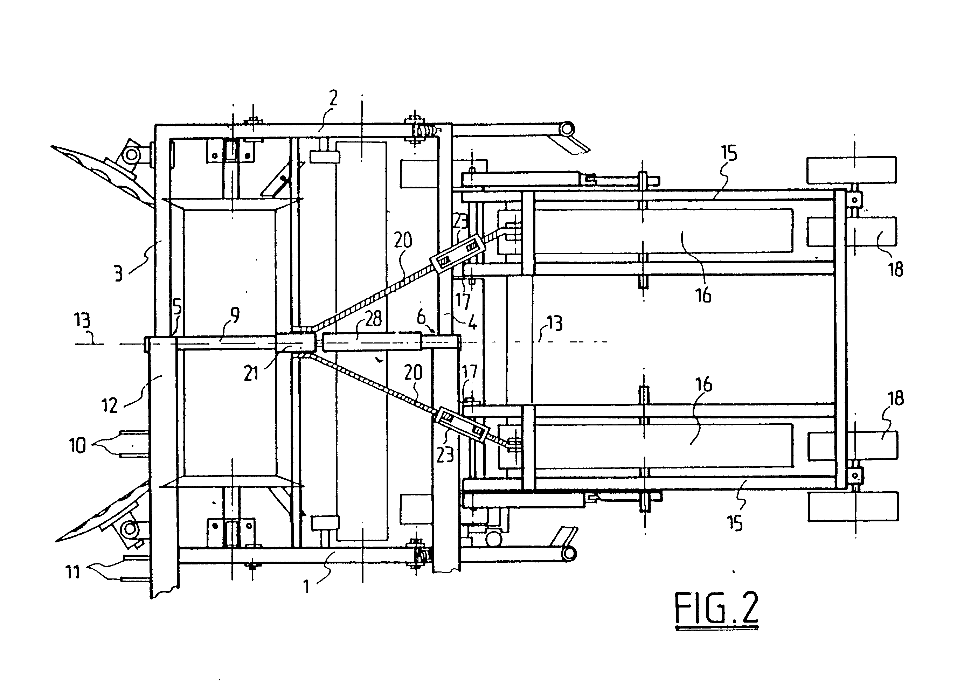

La machine, montrée aux Figs. 1 et 2, comprend un cadre sensiblement horizontal formé de deux longerons 1 et 2 et de deux traverses 3 et 4. Le cadre est suspendu, aux milieux 5 et 6 des traverses 3 et 4, à une potence comprenant un montant avant 7 et un montant arrière 8 dont les extrémités supérieures sont réunies par une entretoise 9. La potence est fixée au système de suspension «trois points» du tracteur par les pattes 10 et 11. Sur les Figs. 1 et 2, on n'a montré que deux de ces pattes, mais il doit être entendu que le tracteur traîne au moins une paire, et souvent deux paires, de machines, lesquelles sont accouplées par des barres transversales, telles que 12, si bien que les pattes 10 et 11 des Figs. 1 et 2 sont complétées par des pattes analogues prévues sur les machines accouplées. En pratique, la liaison entre le cadre et sa potence est telle que le cadre peut être animé d'un mouvement de roulis par rapport à la potence. Ces liaisons sont symbolisées aux Figs. 1 et 2 par l'axe 13 en traits mixtes. Les trous 14 de fixation des pattes 10 peuvent être oblongs de manière à régler l'angle de tangage du cadre par rapport au tracteur.

A l'arrière de la traverse 4 du cadre, est prévu un châssis 15 dans lequel sont montées deux roues semeuses 16. Le châssis 15 est articulé sur des chapes à axes horizontaux 17 portées par la traverse 4. Sous la partie arrière du châssis 15 sont prévues des roues 18 qui roulent sur le sol pour supporter l'arrière du châssis 15 pendant le semis. Le châssis 15 est complété par deux montants 19 aux extrémités supérieures desquels sont fixées les extrémités de deux tirants 20 dont les autres extrémités sont reliées à un coulisseau 21 monté sur l'entretoise 9. Bien entendu, les liaisons entre 19 et 20 et entre 20 et 21 sont rotatives. Au coulisseau 21 est fixée la tête de la tige d'un vérin 22 dont le corps est fixé sur l'entretoise 9. Le fonctionnement du vérin 22 permet de, par exemple, soulever le coulisseau 21 qui tire les tirants 20, lesquels soulèvent le châssis 15 en le faisant pivoter autour des chapes 17. Les tirants 20 sont munis de ridoirs 23 qui permettent de régler la position du châssis 15 par rapport au niveau du sol.

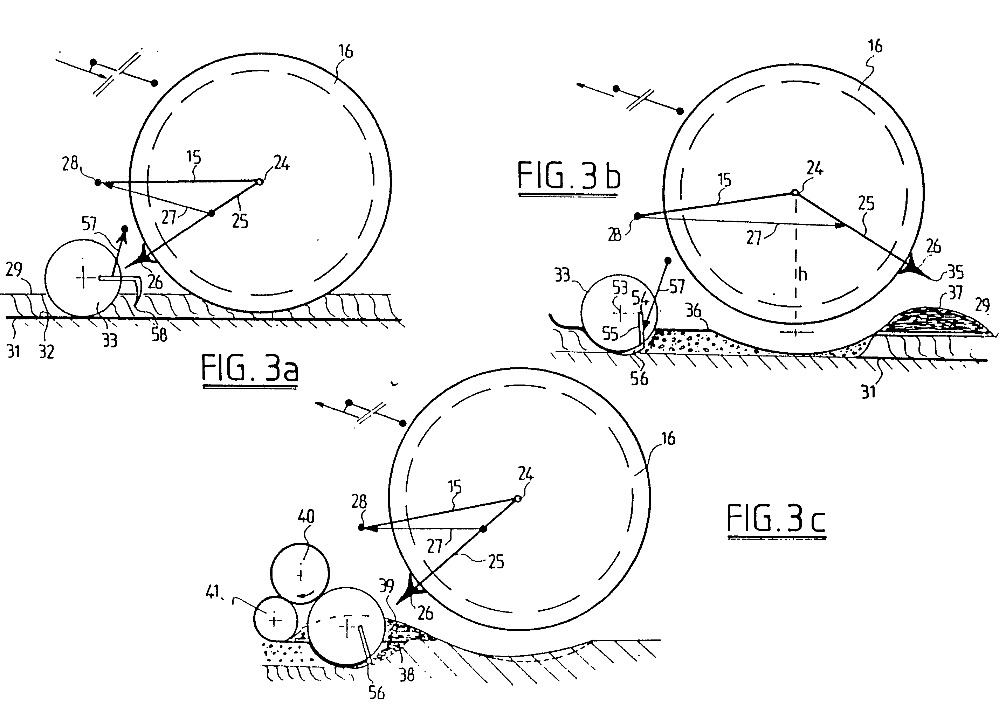

Sur les bouts 24 d'axe externes des roues semeuses 16, sont fixées deux bras parallèles 25 dont les extrémités sont reliées aux extrémités d'une lame transversale 26. Chaque bras 25 est relié à la tête de la tige d'un vérin 27 dont le corps est fixé à la traverse 4 par une chape 28. Le rôle de la lame 26, qui est très important en ce qui concerne l'efficacité de la machine, est décrit en détail en relation avec les Figs. 3a à 3c.

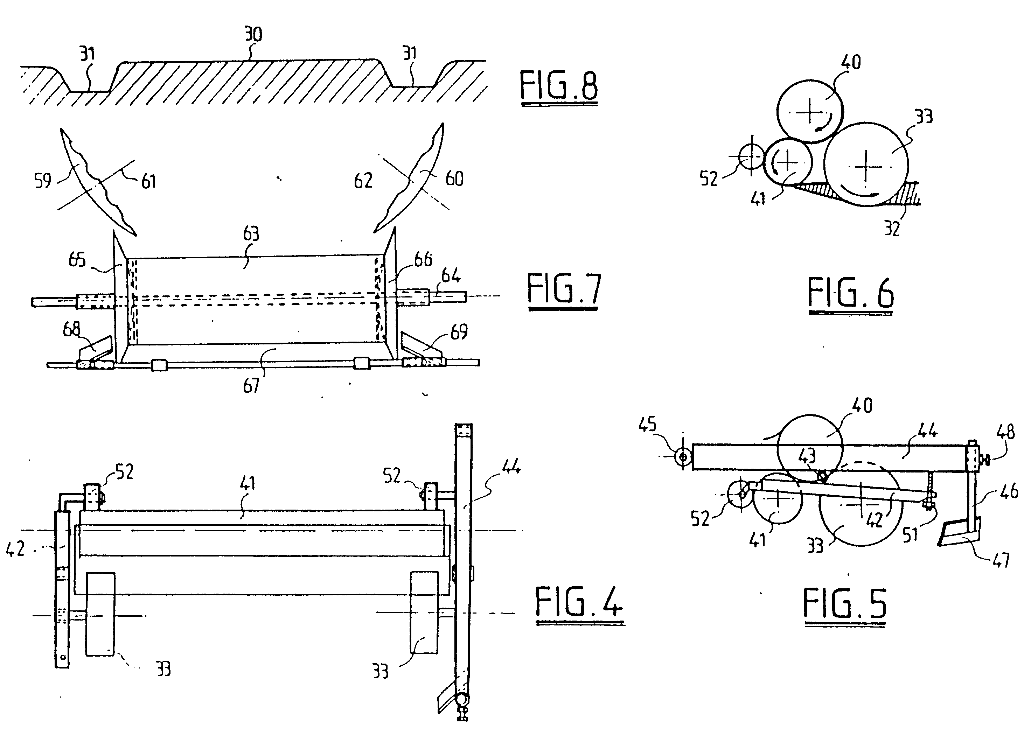

A la Fig. 3a, la machine est supposée en phase semis. Le film 29 est déroulé sur la planche 30 et sur les sillons 31, aux fonds desquels les bords 32 du film sont appliqués par les roues plombeuses 33 avant d'être recouverts par la terre ramenée par les socs 34, Fig. 1. Les roues semeuses 16 piquent les graines dans la planche 30, Fig. 8, à travers le film 29. Le vérin 27 est en position rétractée, les bras 25 sont tirés vers l'avant des roues semeuses 16 et la lame 26 se trouve au-dessus du niveau du film 29 devant les roues 16.

A la Fig. 3b, la machine est arrêtée en fin de planche. Les roues semeuses sont relevées au moyen du vérin 22 jusqu'à une hauteur h au-dessus du niveau de la planche 30 qui est inférieure de quelques centimètres à la distance entre l'axe 24 et l'extrémité 35 de la pelle 26. Le vérin 27 est alors actionné pour faire décrire au bras 25 un angle d'environ 120° dans le sens inverse des aiguilles d'une montre. Lors du mouvement des bras 25, le bord inférieur 35 de la lame 26 vient en contact avec le film 29 qu'elle coupe en 36 en pénétrant dans la terre de la planche 30. Le bout du film 29 relié au film déjà déposé est ramené vers l'arrière de la machine ainsi qu'une masse de terre qui, à la fin du mouvement de la pelle 26 forme le tas 37 au-dessus du film 29 déjà déposé. Ainsi, le film déposé est maintenu solidement plaqué au sol à la fois par ses bords enterrés dans les sillons et son extrémité surmontée du tas de terre 37. A noter que le réglage des tirants 20, au moyen des ridoirs 23, permet de dégager plus ou moins de terre et de contrôler la hauteur h.

Pendant le demi-tour dans la fourrière, l'ensemble de la machine est relevé par le «système trois points» du tracteur.

A la Fig. 3c, en position début de planche, la machine est descendue sur le sol, les roues semeuses restant toujours relevées. Le bout du film non détaché 38 qui avait été déroulé avant la coupure en fin de planche se trouve sur le sol. Le vérin 27 est alors actionné pour ramener les bras 25 dans le sens des aiguilles d'une montre et la pelle 26 creuse le sol derrière le bout de film 38 pour y entasser une masse de terre 39 qui va maintenir le début du film au départ d'un nouveau rang. Les roues semeuses 16 sont ensuite descendues en position de travail et la machine peut rapartir. On notera que les mouvements de la pelle 26, Figs. 3b et 3c, se déroulent alors que la machine est arrêtée. La lame 26 a un profil en Y, dont l'extrémité inférieure de la base constitue le tranchant alors que les branches constituent un versoir transversal.

Les Figs. 4 et 5 représentent le système de dévidage de la bobine de film 40. La bobine 40 repose librement, d'une part, sur les roues plombeuses 33 et, d'autre part, sur un rouleau fou 41. Les axes des roues 33 et 41 sont portés par un bras latéral 42 qui est fixé pivotant sur une axe 43. L'axe 43 est porté par un autre bras 44 dont une extrémité est fixé pivotante sur un axe 45 monté sous le cadre. A l'autre extrémité du bras 44 est fixé, au moyen d'une tige 46 un socle de recouvrement de sillon 47. La position verticale de la tige 46 peut être réglée, par rapport au bras 44, au moyen d'une vis de serrage 48. Comme le montre la Fig. 1, un ressort 49 sensiblement vertical est comprimé entre une patte 50 solidaire du cadre et le bras 44 afin d'appliquer fortement le socle 47 sur le sol. La position du bras 42 par rapport au bras 44 est réglée par une vis 51 vissée verticalement dans une extrémité du bras 42 et dont le bout vient en butée sous le bras 44. Le système de dévidage de film est complété par des galets 52 portés par les bras 42 et appliqués sur le rouleau fou 41.

Quand la machine avance dans le sens de la flèche F de la Fig. 1, les roues plombeuses 33 tournent librement dans le sens contraire des aiguilles d'une montre au fond des sillons 31. Comme la bobine 40 repose sur les roues 33, la vitesse circonférencielle de la bobine 40 est égale à celle des roues 33, c'est-à-dire égale à la vitesse d'avancement de la machine. Aucune tension n'est donc exercée sur le film. Le film est déroulée en passant devant le rouleau fou 41, entre ce dernier et les galtes 52 puis, sous les roues plombeuses 33. La vis 51 permet par rotation du bras 42 autour de l'axe 43 de positionner la hauteur du rouleau fou 41 par rapport au niveau de la planche 30. Par exemple, le rouleau 41 peut être positionné pour affleurer la planche 30 en égalisant celle-ci transversalement. A noter que cette disposition n'exerce pas de tension parasite sur le film car la vitesse circonférencielle du rouleau 41 est encore égale à la vitesse d'avancement de la machine. La Fig. 6 montre clairement comment se déroule le film.

Comme le montre la Fig. 1, derrière l'axe 53 de chaque roue plombeuse 33 est fixée, sous le bras 42, un axe 54 sur lequel peut pivoter un étrier 55, à la base duquel est fixé un sabot 56, l'ensemble 54, 55, 56 pouvant fonctionner vis-à-vis de la roue plombeuse 33 comme un «sabot de Denver». Une des branches de l'étrier 55 est fixée au bout de la tête de tige d'un vérin 57 dont le corps est fixé au cadre.

Le rôle du sabot 56 va maintenant être décrit en relation avec les Figs. 3a à 3c. A la Fig. 3a, le vérin 57 est rétracté, soulevant l'étrier 55 et le sabot 56 dont l'extrémité 58 est au-dessus du fond du sillon 31. A la Fig. 3b, en fin de planche, pendant le mouvement de la pelle 26, ou après, le vérin 57 repousse l'étrier 55 et le sabot 56 dans le sens contraire des aiguilles d'une montre de manière que la pointe 58 pénètre légèrement dans le fond 31 du sillon et vienne appliquer le bord 32 du film sous la roue 33, ce qui a pour effet, d'une part, de pincer le film et d'autre part de bloquer la roue 33 en rotation. Ainsi, pendant le demi-tour en fourrière le bout déroulé du film reste bien accroché et la bobine 40 est immobilisée par le blocage des roues 33. Bien entendu, la longueur de l'étrier 55 est légèrement inférieure au rayon de la roue 33. La longueur du sabot 56 est prévue suffisamment longue pour obtenir un bon freinage de la roue 33. La terre emprisonnée entre le bout 58 et le bord de film 32 forme un revêtement protecteur du film pendant le demi-tour.

Au début de la nouvelle planche Fig. 3c, une fois la machine descendue à l'aide du «système trois points», on la fait avancer jusqu'à ce que les roues 33, qui sont toujours bloquées arrivent en face du début de planche à recouvrir du film. Dans le même temps que la pelle 26 revient vers l'avant pour former le tas 39 au-dessus de 38, le vérin 57 est actionné pour relever le sabot 56 et le ramener dans la position montrée à la Fig. 3a. Les roues semeuses 16 peuvent alors être abaissées et la machine reprend son semis.

A l'avant de la machine, Figs. 1 et 7, sont montés deux disques découvreurs 59 et 60 dont les axes 61 et 62 se coupent devant eux. Les disques 59 et 60 sont crantés de manière, d'une part, à passer plus facilement les obstacles, tels que les pierres, et, d'autre part, à mieux rouler sur la terre. De plus, les disques 59 et 60 sont concaves vers le point de rencontre de leurs axes. Ils creusent les sillons 31 en ramenant une partie de la terre vers la planche.

A l'arrière des disques 59 et 60, est prévu un rouleau égalisateur 63 qui tasse la terre ramenée par les disques sur la planche. La largeur du rouleau 63 est égale à celle de la planche. Le rouleau 63 est un cylindre creux, au moins à ses extrémités. L'axe 64 du cylindre 63 est relié, d'une part, au cadre de la machine et, d'autre part, au cylindre, par des moyens appropriés. Sur les bouts de l'axe 64, sont montés fous des disques 65 et 66 concaves vers l'extérieur et avec leurs calottes internes entrant dans le cylindre 63. Les disques 64 et 65 ont pour rôle de bien tasser les bords internes des sillons 31 de manière que le film s'applique bien. Etant donné que les disques 65 et 66 ont une circonférence plus grande que celle du rouleau 63, leur vitesse de rotation est différente de celle du rouleau 63. C'est pourquoi ils sont montés fous aux extrémités du rouleau 63.

Au-dessus du rouleau 63, est prévu un racloir 67 qui détache la terre qui se colle au rouleau. A noter que la différence de vitesse de rotation du rouleau 63 et des disques 65 et 66 évite les amas de terre, notamment aux extrémités du rouleau.

Derrière les disques 65 et 66, sont montés sur le cadre de la machine, des socs rasettes 68 et 69 qui raclent le fond des sillons 31 et rejettent la terre raclée sur les bords externes des sillons. Derrière les roues plombeuses 33, les socs 47, en face des bords externes des sillons 31, ramènent la terre surmontant ces bords sur les bords du film 32 afin de les recouvrir.

Pour résumer, la machine de pose de film sur le sol selon l'invention comporte des moyens pour dévider au moins une bobine de film, des roues plombeuses (33) latérales à la portion de terrain couverte par le film et appliquant les bords du film dans deux sillons latéraux effectués par des moyens de creusement, un dispositif de maintien du film arrêtant la rotation de la bobine de film et un dispositif pour découper le film et le maintenir pendant les demi-tours dans les fourrières, le dispositif de coupe étant constitué par une lame de pelle (26) transversale montée au bout de bras (35) soumis à des moyens de manœuvre et qui peuvent tourner autour d'un axe horizontal transversal (24). Cette machine est caractérisée en ce que la lame de pelle est située en arrière des roues plombeuses (33) et en ce que les bras (25) sont solidaires de pistons de verins (27) parallèles formant lesdits moyens de manœuvre et dont les corps sont solidaires du châssis (1) de la machine, ledit axe de rotation (24) étant réglable en hauteur par rapport au sol, de manière qu'en position de semis, les vérins (27) dirigent les bras (25) avec la lame (26) en avant de l'axe de rotation et au-dessus du sol, qu'en position de fin de planche à l'arrêt, les vérins (27) fassent décrire à la lame (26) un arc de cercle d'environ 120° vers l'arrière dans le sens contraire des aiguilles d'une montre au cours duquel le bord (35) de la lame (26) coupe le film, pénètre dans la terre que la lame (26) déplace en arrière, repliant ainsi sur lui-même le bout du film (29), posé tout en amassant sur la partie repliée une masse de terre (37) et qu'en position de début de planche à l'arrêt, les vérins (27) fassent décrire à la lame (26) le même arc en sens inverse au cours duquel la lame (26) amasse sur le début du film (29) à poser une masse de terre (39).

## Revendications

1. Machine de pose d'un film sur le sol comportant:

— des moyens pour dévider au moins une bobine de film,

— des roues plombeuses (33) latérales à la portion de terrain couverte par le film et appliquant les bords du film dans deux sillons latéraux effectués par des moyens de creusement,

— un dispositif de maintien du film arrêtant la rotation de la bobine de film,

— un dispositif pour découper le film et le maintenir pendant les demi-tours dans les fourrières constitué par une lame de pelle (26) transversale montée au bout de bras (25) soumis à des moyens de manœuvre et qui peuvent tourner autour d'un axe horizontal transversal (24) caractérisée en ce que la lame de pelle est située en arrière des roues plombeuses (33) et en ce que les bras (25) sont solidaires de pistons de vérins (27) parallèles formant lesdits moyens de manœuvre dont les corps sont solidaires du châssis (1) de la machine, ledit axe de rotation (24) étant réglable en hauteur par rapport au sol, de manière qu'en position de semis les vérins (27) dirigent les bras (25) avec la lame (26) en avant de l'axe de rotation et au-dessus du sol, qu'en position de fin de planche, à l'arrêt, les vérins (27) fassent décrire à la lame (26) un arc de cercle, d'environ 120° vers l'arrière dans le sens contraire des aiguilles d'une montre, au cours duquel le bord (35) de la lame (26) coupe le film, pénètre dans la terre que la lame déplace en arrière, repliant ainsi sur lui-même le bout du film (29) posé tout en amassant sur la partie repliée une masse de terre (37) et qu'en position de début de planche, à l'arrêt, les vérins (27) fassent décrire à la lame (26) le même arc en sens inverse au cours duquel la lame (26) amasse sur le début du film (29) à poser une masse de terre (39).

2. Machine de pose de film suivant la revendication 1, caractérisée en ce que la lame (26), vue sur le côté, a un profil en Y.

3. Machine de pose de film suivant la revendication 1 ou 2, caractérisée en ce que, lorsque la machine comporte en outre des roues semeuses (16), l'axe de rotation (24) de la lame (26) est confondu avec celui des roues semeuses (16).

4. Machine de pose de film suivant l'une des revendications 1 à 3, caractérisée en ce que le dévideur de film comprend les roues plombeuses (33), un rouleau fou transversal (41), la bobine (40) de film reposant, à l'arrière, sur les roues plombeuses (33) et, à l'avant sur le rouleau fou transversal (41), le fil en cours de déroulement étant appliqué sur l'avant du rouleau fou transversal (41) et sous les roues plombeuses (33).

5. Machine de pose de film suivant la revendication 4 avec le dispositif maintenant le film (29) pendant les demi-tours constitué par un sabot (56) monté au bout d'un bras (55) accroché au châssis de la machine et pouvant tourner autour d'un axe (54) horizontal sous l'action d'un moyen de manœuvre, caractérisée en ce que la largeur du sabot (56) est de l'ordre de l'épaisseur de la roue plombeuse (33), l'axe (54) du bras (55) est positinné légèrement derrière l'arbre de la roue plombeuse, la longueur du bras étant légèrement inférieur au rayon de la roue plombeuse (33), le sabot (56) étant perpendiculaire au bras et dirigé vers l'avant et un vérin (57) déplaçant le bras.

6. Machine de pose de film suivant l'une des revendications 1 à 5, caractérisée en ce que les moyens de creusement des sillons latéraux (31) comprennent un disque découvreur (59, 60) dont l'axe (61, 62) est dirigé de manière que son point de rencontre avec l'axe (62, 61) de l'autre disque découvreur (60, 59) soit devant les disques découvreurs et en ce qu'elle possède un rouleau transversal (63) de tassement, dont l'arbre (64) porte à chacune de ses extrémités un disque (65, 66) concave vers l'extérieur, la calotte centrale de chaque disque concave (65, 66) entrant à l'intérieur du cylindre du rouleau de tassement (63), le rouleau et les disques concaves tournant indépendamment les uns des autres autour dudit arbre (64), et, à l'arrière de chaque disque concave (64, 65), un soc rasette (68) dont le bord inférieur est au niveau du fond du sillon (31) et ouvert vers l'extérieur.

**Patentansprüche**

1. Vorrichtung zum Aufbringen einer dünnen Folie auf dem Erdboden, aufweisend:
- eine Einrichtung zum Abwickeln wenigstens einer Folienrolle,
- seitlich des von der dünnen Folie bedeckten Erdbodens angeordnete und die Ränder der dünnen Folie in zwei durch Einrichtungen zum Graben bewirkte seitliche Furchen andrückende Walzenräder (33),
- eine Einrichtung zum Anhalten der dünnen Folie durch Stillsetzen der Rotation der Folienrolle,
- eine Einrichtung zum Abschneiden der dünnen Folie und zum Halten der Folie während der Umkehrungen in dem durch eine am Ende des mittels einer Betätigungseinrichtung um eine horizontale transversale Achse (24) drehbaren Arms (25) befestigte transversale Schaufelplatte (26) gebildeten Durchlaß, dadurch gekennzeichnet, daß die Schaufelplatte hinter den Walzenrädern (33) angeordnet ist und die Arme (25) fest mit den die Betätigungseinrichtung bildenden parallelen Hubkolben (27) verbunden sind, deren Gehäuse mit Gestell (1) der Vorrichtung verbunden ist, wobei die Rotationsachse (24) im Verhältnis zum Erdboden derart höhenverstellbar ist, daß in Sä-Stellung die Kolben die Arme (25) mit den Schaufelplatten (26) oberhalb des Erdbodens vor die Rotationsachse bewegen, daß beim Anhalten am Ende der Bahn die Kolben (27) mit den Schaufelplatten (26) einen Kreisbogen von ungefähr 120° entgegen dem Uhrzeigersinn nach hinten beschreiben, im Verlauf dessen der Rand (35) der Schaufelplatte (26) die dünne Folie abschneidet, in den Erdboden eindringt, die Schaufel nach hinten verschoben wird, wobei das Ende der dünnen Folie umgefaltet und der gefaltete Teil mit einer Menge Erde (37) bedeckt wird, und daß die Kolben (27) nach dem Anhalten am Anfang der Bahn mit der Schaufelplatte (26) den gleichen Bogen im umgekehrten Sinn beschreiben, im Verlauf dessen die Schaufelplatte (26) eine Menge Erde anhäuft und auf den Anfang der dünnen Folie (29) ablegt.

2. Vorrichtung nach Anspruch 1, dadurch gekennzeichnet, daß die Schaufel (26), von der Seite betrachtet, ein Y-Profil aufweist.

3. Vorrichtung nach Anspruch 1 oder 2, dadurch gekennzeichnet, daß sie außerdem Räder zum Säen (16) aufweist, deren Drehachsen (24) mit derjenigen der Schaufelplatte (26) übereinstimmen.

4. Vorrichtung nach einem der Ansprüche 1 bis 3, dadurch gekennzeichnet, daß die Folien-Abwickeleinrichtung die Walzenräder (33) und eine bewegliche Querwalze (41) aufweist und die Folienspule (40) nach hinten auf den Walzenrädern (33) und nach vorn auf der beweglichen Querwalze (41) abgestützt ist, und daß die dünne Folie im Verlauf des Abwickelns nach vorn über die bewegliche Querwalze (41) und unter die Walzenräder (33) geführt ist.

5. Vorrichtung nach Anspruch 4 mit einer Einrichtung zum Halten der Folie während der Umkehrungen, bestehend aus einem am Ende eines am Rahmen der Vorrichtung aufgehängten und unter der Einwirkung einer Betätigungseinrichtung um eine horizontale Achse (54) verdrehbaren Arms (55) befestigten Bremsklotz (56), dadurch gekennzeichnet, daß die Größe des Bremsklotzes (56) von der Größenordnung der Dicke des Walzenrades (33) ist, die Achse (54) des Arms (55) etwas hinter der Welle des Walzenrades (33) angeordnet ist, die Länge des Arms etwas kleiner als der Radius des Walzenrades (33) ist und der Bremsklotz (56) senkrecht am Arm angebracht und nach vorn gerichtet ist, und daß ein Hubkolbenzylinder (57) zum Verstellen des Arms vorgesehen ist.

6. Vorrichtung nach einem der Ansprüche 1 bis 5, dadurch gekennzeichnet, daß die Einrichtung zum Graben seitlicher Furchen (31) eine Schürfscheibe (59, 60) aufweist, deren Achse (61, 62) so gerichtet ist, daß Schnittpunkt mit der Achse 62, 61) der anderen Schürfscheibe (60, 59) vor den Schürfscheiben liegt, und daß sie eine Transversaldruckwalze (63) aufweist, deren Welle (64) an jedem ihrer Enden eine nach außen konkave Scheibe (65, 66) aufweist, deren zentraler Teil in das Innere des Zylinders der Druckwalze (63) hineinragt, wobei die Walze und die konkaven Scheiben sich unabhängig voneinander um die Welle (64) derehen und hinter jeder konkaven Scheibe (64, 65) eine Pflugschar (68) angeordnet ist, deren unterer Rand sich auf dem Niveau des Grundes der Furche (61) befindet und die nach oben offen ist.

**Claims**

1. A machine for laying a film on the ground comprising:
- means to unwind at least one roll of film,
- flat rolling wheels (33) lateral to the portion of ground covered by the film and applying the edges of the film into two lateral furrows made by digging means,
- a film holding means for stopping rotation of the reel of film,
- means for cutting the film and holding it, during turns in the headland regions, comprising a scooping blade (26) mounted transversely at the end of arms (25) which are controlled by operating means and which can turn around a transverse horizontal shaft (24) characterized in that the flat rolling wheels (33) and in that the arms (25) are fixed to pistons of parallel jacks (27) forming the said operating means, the bodies of which are fixed to the chassis (1) of the machine, the said axis of rotation (24) being adjustable in height relative to the ground so that in the planting position the jacks (27) direct the arms (25) with the blade (26) in front of the axis of rotation and above the ground, and so that in the position at the end of the cultivated strip, whilst stationary, the jacks (27) make the blade describe an arc of a circle of about 120° anticlockwise towards the rear, during the course of which the edge (35) of the blade (26) cuts the film, and penetrates into the earth which the blade displaces backwards, thus folding the end of the film (29) on itself whilst amassing on the folded part a heap of earth (37), and so that in the position at the start of the cultivated strip, whilst stationary, the jacks (27) make the blade describe the same arc in the opposite direction, during the course of which the blade (26) amasses a heap of earth (39) on the front part of the film (29) to be laid.

2. A machine for laying a film according to claim 1, characterized in that the blade (26) is Y-shaped when seen from the side.

3. A machine for laying a film according to claim 1 or 2, characterized in that, when the machine also comprises planting wheels (16), the rotation shaft (24) of the blade (26) coincides with that of the planting wheels (16).

4. A machine for laying a film according to any one of claims 1 to 3, characterized in that the film unwinder is comprised by the flat rolling wheels (33) and a free rolling transverse roller (41), the reel of film (40) resting at the back on the flat rolling wheels (33), and in front on the free rolling transverse roller (41), the film in the course of unrolling being applied on the front of the free rolling transverse roller (41) and under the flat rolling wheels (33).

5. A machine for laying a film according to claim 4 in which the means for holding the film (29) during the turns is constituted by a shoe (56) mounted at the end of an arm (55) hooked to the chassis of the machine and able to turn about a horizontal shaft (54) as a result of the action of an operating means, characterized in that the width of the shoe (56) is of the order of the thickness of the flat rolling wheel (33), the shaft (54) of the arm (55) is positioned slightly behind the shaft of the flat rolling wheel, the length of the arm being slightly less than the radius of the flat rolling wheel (33), the shoe (56) being perpendicular to the arm and directed forwards, and a jack (57) moving the arm.

6. A machine for laying a film according to any one of claims 1 to 5, characterized in that the means for digging out the lateral furrows (31) comprise an uncovering disc (59, 60) the axis of which (61, 62) is directed in such a way that its meeting point with the axis (62, 61) of the other uncovering disc (60, 59) is in front of the uncovering discs, and in that it possesses a transverse flattening roller (63) the shaft of which (64) bears a disc (65, 66) concave towards the outside at each of its ends, the central dome of each concave disc (65, 66) entering the inside of the cylinder of the flattening roller (63), the roller and the concave discs turning independently of one another about the said shaft (64) and, at the rear of each concave disc (65, 66) there is a ploughshare coulter (68) the lower edge of which is at the level of the bottom of the furrow (31) and open outwards.

FIG. 1

EP 0189449 B1

FIG.2

EP 0189449 B1

FIG.3a

FIG.3b

FIG.3c

FIG.8

FIG.7

FIG.6

FIG.4

FIG.5

EP 0189449 B1